# EUROPEAN PATENT SPECIFICATION

(11) **EP 1 350 016 B1**
(45) Date of publication and mention of the grant of the patent: **03.11.2004**
(21) Application number: 01273128.7
(22) Date of filing: 13.12.2001
(51) Int. Cl.: F02C 1/04, F02C 3/26, F02C 6/18

(54) **POWER GENERATING SYSTEM**
ENERGIEERZEUGUNGSSYSTEM
SYSTEME DE PRODUCTION D'ENERGIE

(30) Priority: 10.01.2001 GB 0100601
(43) Date of publication of application: 08.10.2003
(73) Proprietor: Talbott's Heating Limited, Stafford ST16 3HJ (GB)
(72) Inventor: TALBOTT, Robert E., Talbott's Heating Limited, Stafford ST16 3HJ (GB); TALBOTT, Benjamin C., Talbott's Heating Limited, Stafford ST16 3HJ (GB); PRITCHARD, David Lyndon, Talbott's Heating Limited, Stafford ST16 3HJ (GB)
(74) Representative: Parnham, Kevin
(86) International application number: PCT/GB2001/005500
(87) International publication number: WO 2002/055855

(56) References cited:
- GB-A- 1 539 508
- US-A- 4 642 864
- US-A- 5 687 570
- US-A- 5 775 267
- US-A- 6 066 898

## Description

The present invention relates to power generating systems such as disclosed in US-A-5 687 570.

The generation of electrical power and particularly relatively small scale power generation employing conventional techniques has several disadvantages.

Recently, micro turbines, which are small, recuperated gas turbines have been developed that offer many benefits over conventional small scale power generation technologies. Their principal benefits are reduced costs, increased reliability and availability and also ultra-low emissions.

However a significant disadvantage of micro turbines is that they can only be operated from gaseous and liquid fuels.

According to the present invention there is provided a power generating system comprising a combustion chamber for combustion of solid fuel material, a heat exchanger associated with the combustion chamber through which fluid passes to be heated by combustion of the solid fuel material, and a turbine which is driven by the heated fluid to generate power, wherein the heat exchanger includes selectively removable baffles.

The turbine is preferably a gas turbine, and may comprise a micro turbine.

The heat exchanger may comprise a fluid inlet through which preferably partially pre-heated fluid is introduced into the heat exchanger. Fluid maybe introduced into the heat exchanger under compression, and may have been passed through a compressor which may have pre-heated the fluid for introduction. Fluid may be introduced at a temperature in the range 150-250°C, and preferably 200°C. The fluid is preferably a gas, and may be atmospheric air.

Preferably the heat exchanger is located in an upper part of the combustion chamber and preferably at or near the top thereof. The heat exchanger may comprise a conduit through which fluid flows to be heated, the conduit defining a tortuous path to facilitate the heating of air therein. The heat exchanger preferably keeps the fluid separate from combustion gases generated during combustion, whilst allowing the gases to pass around the outside of the conduit whereby to heat the fluid passing through the conduit

The baffles may be provided in the heat exchanger to divert combustion gases over the conduit to facilitate heat transfer. Preferably the heat exchanger further comprises insulation materials to further improve heat transfer. The insulation material may line the inside of a housing of the exchanger and may comprise ceramics material.

The heat exchanger may comprise materials able to resist high temperatures and retain strength and geometry at temperatures up to in the order of 1000°C whilst providing good conduction of heat, such as exotic stainless steel or other suitable, conductive yet durable material. The heat exchanger is preferably readily dismantled, at least in part, to facilitate cleaning thereof, in particular cleaning of the outside of the conduit for example to remove combustion by-products such as soot and other carbonaceous deposits.

Preferably the heat exchanger is arranged to allow fluid passing therethrough to be heated to approximately 800-900°C, depending upon the material being combusted.

Preferably the combustion chamber is arranged to accommodate combustion of a range of solid fuel materials, such as combustible waste, fossil fuels and wood. It is preferable to use sustainable or renewable fuels.

Preferably heated fluid exits the heat exchanger to be introduced to the turbine to drive the turbine to generate electrical power. A conduit may connect the heat exchanger to the turbine which may be remote from the heat exchanger. Means may be provided to process generated power, such as an inverter/rectifier means.

Preferably means is provided to feed heated fluid which has driven the turbine back into the combustion chamber where any residual heat in the fluid will facilitate and enhance the efficiency of combustion.

The system may further comprise means to utilise waste gases from the combustion chamber, particularly to use the residual heat in the gases to heat for example an appliance, such as a radiator, before the gases are exhausted from the system.

The invention further provides a method of generating power, the method comprising combusting solid fuel material in a combustion chamber to heat fluid passing through a heat exchanger associated with the combustion chamber and including selectively removable baffles, and using said heated fluid to drive a turbine to generate power.

The method may comprise the use of a system substantially as defined in any of the preceding twelve paragraphs.

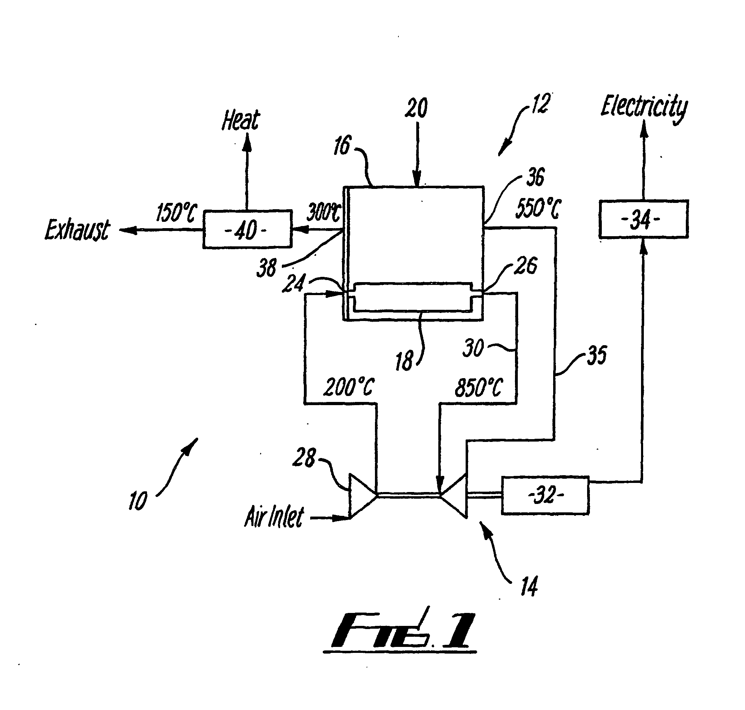

A preferred embodiment of the present invention will now be described by way of example only, with reference to the accompanying drawings in which:-
Fig. 1 is a schematic representation of a power generating system according to the present invention;
Fig. 2 is a plan view of a heat exchanger according to the present invention; and
Fig. 3 is an elevation view of the heat exchanger of Fig. 2.

Referring to the drawings there is provided a power generating system 10 comprising a combustion arrangement 12 in which combustion of fuel material (not shown) is used to heat fluid, such as air and a turbine 14 which is driven by the heated fluid to generate power.

In more detail, the combustion arrangement 12 comprises a combustion chamber 16 at or near the top of which is located a heat exchanger 18. The combustion chamber comprises a fuel inlet 20, generally towards the bottom thereof. The chamber may be constructed of generally conventional materials, and may comprise an outer metallic casing lined with fire resistant material, such as firebrick.

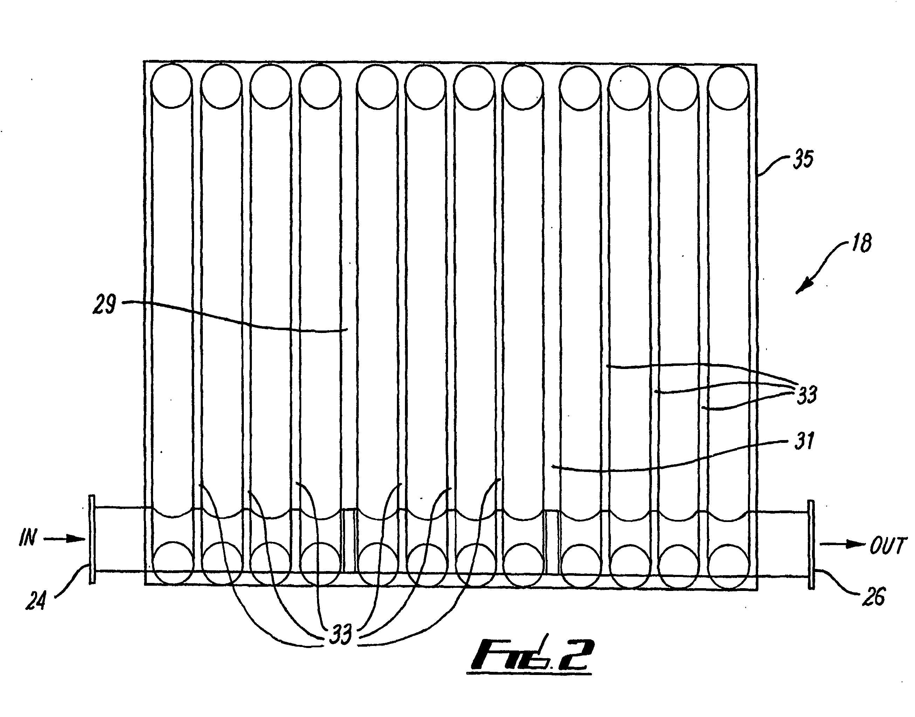

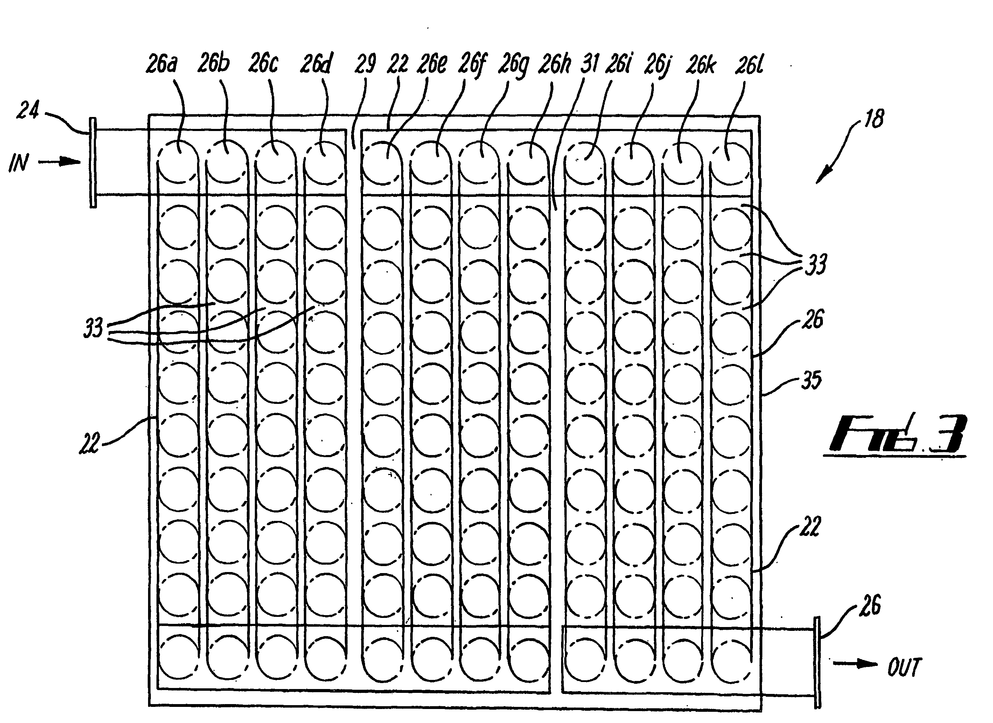

Referring particularly to Figs. 2 and 3, the heat exchanger 18 comprises a conduit 22 having an air inlet 24 and an air outlet 26.

The conduit 22 comprises a plurality of passages 26 which define a matrix within the heat exchanger 18 around the outside of which combustion gases from the chamber 16 can circulate to heat air passing through the conduit 22. The conduit 22 is shown comprising four passages 26 a,b,c and d which extend transversely across the heat exchanger 18 from the inlet 24 to a respective end 27 a,b,c,d at which the passages turn through 90° to extend downward a short distance from toward the top of the exchanger toward the bottom. The passages 26 a,b,c,d extend downward a short distance, then across, back across toward the inlet 22, and then down and across until they define a tortuous path extending to the bottom of the exchanger. Toward the bottom the conduit 22 passes beneath a baffle 29 to open into a further array of four passages 26 e,f,g,h which are similar to the passages 26 a,b,c,d. The passages 26 e,f,g,h wind their way up toward the top of the exchanger in similar fashion as described for passages 26 a,b,c,d.

Generally at the top of the exchanger the passages 26 e,f,g,h pass over a further baffle 31 to open into a final array of passages 26 i,j,k,l which wind down in a similar fashion to the outlet 26. This tortuous matrix of passages provides for efficient transfer of heat from combustion gases as they pass around the passages 26 a-1 through the space 33 therebetween. The conduit 22 is made of material able to resist temperatures up to in the order of 1000°C whilst retaining strength and geometry and providing for good heat transfer through a high coefficient of conductivity. The heat exchanger 18 is made of exotic stainless steel, although other suitable materials may be used. The baffles 29,31 are selectively removable to enable cleaning thereof and also of the conduit 22. The baffles 29,31 comprise heat reflective material such as ceramic. Further the housing 35 of the heat exchanger may comprise heat reflective material, such as a lining of ceramics material to help retain heat within the exchanger 18 and thereby to facilitate heat transfer within the exchanger 18.

A compressor 28 is provided which receives from atmosphere air through an air inlet and compresses the air which compressed air is fed into the heat exchanger 18 to the inlet 24. The compressed air is preheated to approximately 200°C, the compression of the air achieving this temperature.

The outlet 26 for the heated air exiting the heat exchanger 18 is connected to the turbine 14, which is a gas turbine, preferably a micro turbine, by a conduit 30. Alternatively the turbine 14 may be directly attached to the outlet 26. The air exiting the heat exchanger 18 is approximately 850°C.

The heated air drives the micro turbine 14 and the generator 32 of the turbine to generate electricity, which electrical output may be subjected to an inverter/rectifier 34 before being outputted for further use.

The heated air used to drive the turbine 14 is collected once used to drive the turbine 14 and re-introduced to the combustion chamber 16 via a conduit 35, whereby to enhance and improve the efficiency of combustion. This air is likely to be of a temperature in the order of 550°C, and is inputted into the combustion chamber 16 through an inlet 36.

An outlet 38 is provided in the combustion chamber 16, to allow combustion gases to be vented from the chamber 16, once those gases have been used to heat air in the exchanger 18. The temperature of the gases vented are in the order of 300°C and these are introduced to an appliance such as a radiator or other heating appliance 40 which could be used, by heat exchange to heat an object or a room. This provides further energy efficiency of the system 10.

The gases are then exhausted from the appliance 40 for example to atmosphere.

In use, the system 10 enables gas turbines and in particular the relatively advantageous micro turbines to be powered indirectly using solid fuels. Heretofore, driving gas turbines and in particular micro turbines has not been possible using solid fuel.

The advantage of being able to use solid fuel, is that sustainable and renewable source fuels can be used, as well as waste and by-products, such as wood, paper, animal products and the like. The internals of the combustion chamber may be modified according to the fuels to be combusted.

In use, suitable fuels are inputted into the combustion chamber 16 through the inlet 20, and these are ignited to combust.

Heat and gases generated by combustion rise up the chamber 16 and pass around the outside of the conduit 22 of the heat exchanger 18 through the space 33 therebetween. The baffles 29,31 help direct the combustion gases over the conduit 22. As this is happening, air is compressed by the compressor 28 and fed through the inlet 24 into the heat exchanger at a temperature of approximately 200°C. As the air passes through the passages 26a-1 of the heat exchanger 18 toward the outlet 26, the combustion gases heat up the air, until it exits through the outlet 26 generally at a temperature in the order of 850°C. The ceramic lining on the housing 35 help to improve the efficiency of the exchanger.

This heated air is then introduced to the turbine 14, whereby the heated air, which is now relatively fast moving, turns blades within the turbine 14 thereby driving the turbine 14 to generate electricity through the generator 32, which electricity is subjected to an inverter/rectifier 14 for output for use, for example for powering electrical apparatus and systems in the normal way.

The heated air that drives the micro turbine 14 is vented off once past the blades and fed back into the combustion chamber 16 through the inlet 36. This air is at a temperature in the order of 550°C, and therefore when inputted into the chamber 16 acts to improve the efficiency of combustion, and also heating of further air as it passes through the exchanger 18.

As combustion continues, combustion gases which have been used to heat air, and therefore which are of relatively low temperature (in the order of 300°C), are vented through the outlet 28 to heat up an appliance 40, such as a radiator. This provides for further efficiency of the system.

It will be appreciated that the system 10 according to the present invention provides for the efficient generation of electrical power using sustainable and renewable sources of fuel to drive micro turbines, and therefore allows the advantages of micro turbines to be coupled with the advantages of using sustainable and renewable fuels.

The combustion of fuels produces combustion products such as soot and other carbonaceous materials which form deposits on the outside of the conduit 22. As these build up they could detrimentally affect heat exchange and so it is a feature of the exchanger 18 that it can be selectively dismantled to enable cleaning.

Various modifications may be made without departing from the spirit or scope of the present invention. For example, the arrangement and structure of a heat exchanger may be varied according to desired applications. Moreover, a plurality of heat exchangers may be used. The system may use any suitable fluid to be heated, such as a gas from a gas source.

The system may comprise any number of the aforesaid components and features in any combination.

## Claims

1. A power generating system comprising a combustion chamber (16) for combustion of solid fuel material, a heat exchanger (18) associated with the combustion chamber (16) through which fluid passes to be heated by combustion of the solid fuel material, and a turbine (14) which is driven by the heated fluid to generate power, **characterized in that** the heat exchanger (18) includes selectively removable baffles (29,31).

2. A power generating system according to claim 1, in which the turbine is a gas turbine.

3. A power generating system according to claim 1 or claim 2, in which the turbine comprises a micro turbine.

4. A power generating system according to any preceding claim, in which the heat exchanger comprises a fluid inlet through which fluid is introduced into the heat exchanger.

5. A power generating system according to claim 4, in which fluid introduced is partially pre-heated.

6. A power generating system according to claim 4 or claim 5, in which fluid introduced into the heat exchanger is under compression.

7. A power generating system according to claim 5 or claim 6, in which the fluid has been passed through a compressor which has pre-heated the fluid.

8. A power generating system according to any of claims 4 to 7, in which fluid is introduced at a temperature in the range 150-250°C.

9. A power generating system according to claim 8, in which the fluid is introduced at a temperature of approximately 200°C.

10. A power generating system according to preceding claim, in which the fluid is a gas.

11. A power generating system according to claim io, in which the fluid is atmospheric air.

12. A power generating system according to any preceding claim, in which the heat exchanger is located in an upper part of the combustion chamber.

13. A power generating system according to any preceding claim, in which the heat exchanger is located at or near the top of the combustion chamber.

14. A power generating system according to any preceding claim, in which the heat exchanger comprises a conduit through which fluid flows to be heated, the conduit defining a tortuous path to facilitate the heating of fluid therein.

15. A power generating system according to claim 14, in which the heat exchanger keeps the fluid separate from combustion gases generated during combustion, whilst allowing the gases to pass around the outside of the conduit whereby to heat the fluid passing through the conduit

16. A power generating system according to claim 14 or claim 15, in which the baffles divert combustion gases over the conduit to facilitate heat transfer.

17. A power generating system according to any preceding claim, in which the heat exchanger comprises insulation material to further improve heat transfer.

18. A power generating system according to claim 17, in which the insulation material lines the inside of a housing of the exchanger.

19. A power generating system according to claim 17 or claim 18, in which the material comprises ceramics material.

20. A power generating system according to any preceding claim, in which the heat exchanger comprises materials able to resist high temperatures and retain strength and geometry at temperatures up to in the order of 1000°C whilst providing good conduction of heat, such as exotic stainless steel or other suitable, conductive yet durable material.

21. A power generating system according to any preceding claim, in which the heat exchanger is readily dismantled, at least in part, to facilitate cleaning thereof, in particular cleaning of the outside of the conduit for example to remove combustion by-products such as soot and other carbonaceous deposits.

22. A power generating system according to any preceding claim, in which the heat exchanger is arranged to allow fluid passing therethrough to be heated to approximately 800-900°C, depending upon the material being combusted.

23. A power generating system according to any preceding claim, in which the combustion chamber is arranged to accommodate combustion of a range of solid fuel materials, such as combustible waste, fossil fuels and wood.

24. A power generating system according to claim 23, in which the chamber is arranged to accommodate combustion of sustainable and/or renewable fluid.

25. A power generating system according to any preceding claim, in which heated fluid exits the heat exchanger to be introduced to the turbine to drive the turbine to generate electrical power.

26. A power generating system according to any preceding claim, in which a conduit connects the heat exchanger to the turbine.

27. A power generating system according to any preceding claim, in which the turbine is remote from the heat exchanger.

28. A power generating system according to any preceding claim, in which means is provided to process generated power.

29. A power generating system according to claim 28, in which the means comprises an inverter/rectifier means.

30. A power generating system according to any preceding claim, in which means is provided to feed heated fluid which has driven the turbine back into the combustion chamber where any residual heat in the fluid will facilitate and enhance the efficiency of combustion.

31. A power generating system according to any preceding claim, in which the system further comprises means to utilise waste gases from the combustion chamber, particularly to use the residual heat in the gases to heat for example an appliance, such as a radiator, before the gases are exhausted from the system.

32. A method of generating power, the method comprising combusting solid fuel material in a combustion chamber to heat fluid passing through a heat exchanger associated with the combustion chamber and including selectively removable baffles, and using said heated fluid to drive a turbine to generate power.

33. A method according to claim 32, which comprises the use of a system as claimed in any of claims 1 to 31.

## Patentansprüche

1. Energieerzeugungssystem mit einer Brennkammer (16) zum Verbrennen eines Festbrennstoff-Materials, einem der Brennkammer (16) zugeordneten Wärmetauscher (18), durch den Fluid hindurchtritt, das durch Verbrennung des Festbrennstoff-Materials erhitzt wird, und einer Turbine (14), die durch das erhitzte Fluid angetrieben wird, um Energie zu erzeugen, **dadurch gekennzeichnet, dass** der Wärmetauscher (18) selektiv entfernbare Ablenkplatten (29, 31) enthält.

2. Energieerzeugungssystem nach Anspruch 1, **dadurch gekennzeichnet, dass** die Turbine eine Gasturbine ist.

3. Energieerzeugungssystem nach Anspruch 1 oder 2, **dadurch gekennzeichnet, dass** die Turbine eine Mikroturbine aufweist.

4. Energieerzeugungssystem nach einem der vorhergehenden Ansprüche, **dadurch gekennzeichnet, dass** der Wärmetauscher einen Fluideinlass aufweist, durch den Fluid in den Wärmetauscher eingeleitet wird.

5. Energieerzeugungssystem nach Anspruch 4, **dadurch gekennzeichnet, dass** das eingeleitete Fluid teilweise vorerhitzt wird.

6. Energieerzeugungssystem nach Anspruch 4 oder 5, **dadurch gekennzeichnet, dass** das in den Wärmetauscher eingeleitete Fluid unter Druck steht.

7. Energieerzeugungssystem nach Anspruch 5 oder 6, **dadurch gekennzeichnet, dass** das Fluid durch einen Kompressor hindurchgeleitet wurde, der das Fluid vorerhitzt hat.

8. Energieerzeugungssystem nach einem der Ansprüche 4 bis 7, **dadurch gekennzeichnet, dass** das Fluid bei einer Temperatur im Bereich von 150 bis 250°C eingeleitet wird.

9. Energieerzeugungssystem nach Anspruch 8, **dadurch gekennzeichnet, dass** das Fluid bei einer Temperatur von etwa 200°C eingeleitet wird.

10. Energieerzeugungssystem nach einem der vorhergehenden Ansprüche, **dadurch gekennzeichnet, dass** das Fluid ein Gas ist.

11. Energieerzeugungssystem nach Anspruch 10, **dadurch gekennzeichnet, dass** das Fluid Atmosphärenluft ist.

12. Energieerzeugungssystem nach einem der vorhergehenden Ansprüche, **dadurch gekennzeichnet, dass** sich der Wärmetauscher in einem oberen Teil der Brennkammer befindet.

13. Energieerzeugungssystem nach einem der vorhergehenden Ansprüche, **dadurch gekennzeichnet, dass** sich der Wärmetauscher bei oder in der Nähe des obersten Teils der Brennkammer befindet.

14. Energieerzeugungssystem nach einem der vorhergehenden Ansprüche, **dadurch gekennzeichnet, dass** der Wärmetauscher einen Kanal aufweist, durch den zu erhitzendes Fluid strömt, wobei der Kanal einen kurvenreichen Weg festlegt, um das Erhitzen des Fluids in ihm zu erleichtern.

15. Energieerzeugungssystem nach Anspruch 14, **dadurch gekennzeichnet, dass** der Wärmetauscher das Fluid von den während der Verbrennung erzeugten Verbrennungsgasen getrennt hält, während er die Gase um die Außenseite der Leitung herum vorbeiströmen lässt, wodurch das durch den Kanal hindurchtretende Fluid erhitzt wird.

16. Energieerzeugungssystem nach Anspruch 14 oder 15, **dadurch gekennzeichnet, dass** die Ablenkplatten Verbrennungsgase über den Kanal leiten, um den Wärmeübergang zu erleichtern.

17. Energieerzeugungssystem nach einem der vorhergehenden Ansprüche, **dadurch gekennzeichnet, dass** der Wärmetauscher Isolationsmaterial aufweist, um den Wärmeübergang weiter zu verbessern.

18. Energieerzeugungssystem nach Anspruch 17, **dadurch gekennzeichnet, dass** das Isolationsmaterial die Innenseite des Gehäuses des Wärmetauschers auskleidet.

19. Energieerzeugungssystem nach Anspruch 17 oder 18, **dadurch gekennzeichnet, dass** das Material ein Keramikmaterial aufweist.

20. Energieerzeugungssystem nach einem der vorhergehenden Ansprüche, **dadurch gekennzeichnet, dass** der Wärmetauscher Materialien aufweist, welchen den hohen Temperaturen widerstehen können und ihre Festigkeit und Geometrie bei Temperaturen bis zu etwa 1000°C beibehalten, während sie eine gute Wärmeleitung ermöglichen, wie z.B. exotischer Edelstahl oder ein anderes geeignetes wärmeleitendes, jedoch dauerhaftes Material.

21. Energieerzeugungssystem nach einem der vorhergehenden Ansprüche, **dadurch gekennzeichnet, dass** sich der Wärmetauscher zumindest zum Teil leicht zerlegen lässt, um seine Reinigung zu erleichtern, und zwar insbesondere das Reinigen der Außenseite des Kanals, um z.B. Verbrennungs-Nebenprodukte, wie z.B. Russ und andere kohlenstoffhaltige Ablagerungen zu beseitigen.

22. Energieerzeugungssystem nach einem der vorhergehenden Ansprüche, **dadurch gekennzeichnet, dass** der Wärmetauscher so angeordnet ist, dass er ermöglicht, dass durch ihn hindurchtretendes Fluid je nach dem Material, das verbrannt wird, auf etwa 800 bis 900°C erhitzt wird.

23. Energieerzeugungssystem nach einem der vorhergehenden Ansprüche, **dadurch gekennzeichnet, dass** die Brennkammer so angeordnet ist, dass sie für die Verbrennung eines Bereichs von Festbrennstoff-Materialien, wie z.B. brennbaren Müll, fossile Brennstoffe und Holz, geeignet ist.

24. Energieerzeugungssystem nach Anspruch 23, **dadurch gekennzeichnet, dass** die Kammer so angeordnet ist, dass sie für die Verbrennung eines nachhaltigen und/oder erneuerbaren Fluids geeignet ist.

25. Energieerzeugungssystem nach einem der vorhergehenden Ansprüche, **dadurch gekennzeichnet, dass** erhitztes Fluid aus dem Wärmetauscher austritt, um in die Turbine eingeleitet zu werden, um die Turbine zum Erzeugen elektrischer Energie anzutreiben.

26. Energieerzeugungssystem nach einem der vorhergehenden Ansprüche, **dadurch gekennzeichnet, dass** ein Kanal den Wärmetauscher mit der Turbine verbindet.

27. Energieerzeugungssystem nach einem der vorhergehenden Ansprüche, **dadurch gekennzeichnet, dass** die Turbine von dem Wärmetauscher entfernt angeordnet ist.

28. Energieerzeugungssystem nach einem der vorhergehenden Ansprüche, **dadurch gekennzeichnet, dass** ein Mittel vorgesehen ist, um die erzeugte Energie zu verarbeiten.

29. Energieerzeugungssystem nach Anspruch 28, **dadurch gekennzeichnet, dass** das Mittel ein Wechselrichter-/Gleichrichter-Mittel aufweist.

30. Energieerzeugungssystem nach einem der vorhergehenden Ansprüche, **dadurch gekennzeichnet, dass** ein Mittel vorgesehen ist, um das erhitzte Fluid, das die Turbine angetrieben hat, in die Brennkammer zurückzufördern, wo jegliche Restwärme in dem Fluid die Verbrennung erleichtert und deren Effizienz erhöht.

31. Energieerzeugungssystem nach einem der vorhergehenden Ansprüche, **dadurch gekennzeichnet, dass** das System außerdem ein Mittel aufweist, um Abgase aus der Brennkammer zu verwenden, um insbesondere die Restwärme in den Gasen zum Erhitzen z.B. eines Verbrauchers, wie z.B. einen Heizkörper, zu erhitzen, bevor die Gase aus dem System ausgestoßen werden.

32. Verfahren zum Erzeugen von Energie, wobei das Verfahren aufweist: Verbrennen eines Festbrennstoff-Materials in einer Brennkammer, um ein Fluid zu erhitzen, das durch einen der Brennkammer zugeordneten Wärmetauscher hindurchtritt, der selektiv entfernbare Ablenkplatten enthält, und Verwenden des erhitzten Fluids, um eine Turbine zur Energieerzeugung anzutreiben.

33. Verfahren nach Anspruch 32, **dadurch gekennzeichnet, dass** es die Verwendung eines Systems gemäss einem der Ansprüche 1 bis 31 aufweist.

## Revendications

1. Système de production d'énergie comprenant une chambre de combustion (16) pour la combustion d'une matière combustible solide, un échangeur de chaleur (18) associé à la chambre de combustion (16), à travers lequel un fluide passe pour être chauffé par la combustion de la matière combustible solide, et une turbine (14) qui est entraînée par le fluide chauffé pour produire de l'énergie, **caractérisé en ce que** l'échangeur de chaleur (18) comprend des déflecteurs (29, 31) pouvant être enlevés sélectivement.

2. Système de production d'énergie selon la revendication 1, dans lequel la turbine est une turbine à gaz.

3. Système de production d'énergie selon la revendication 1 ou la revendication 2, dans lequel la turbine comprend une micro turbine.

4. Système de production d'énergie selon une quelconque des revendications précédentes, dans lequel l'échangeur de chaleur comprend une entrée de fluide par laquelle du fluide est introduit dans l'échangeur de chaleur.

5. Système de production d'énergie selon la revendication 4, dans lequel le fluide introduit est partiellement pré-chauffé.

6. Système de production d'énergie selon la revendication 4 ou la revendication 5, dans lequel le fluide introduit dans l'échangeur de chaleur est sous pression.

7. Système de production d'énergie selon la revendication 5 ou la revendication 6, dans lequel le fluide est passé à travers un compresseur qui a préchauffé le fluide.

8. Système de production d'énergie selon une quelconque des revendications 4 à 7, dans lequel le fluide est introduit à une température comprise dans l'intervalle allant de 150 à 250 °C.

9. Système de production d'énergie selon la revendication 8, dans lequel le fluide est introduit à une température d'environ 200 °C.

10. Système de production d'énergie selon une revendication précédente, dans lequel le fluide est un gaz.

11. Système de production d'énergie selon la revendication 10, dans lequel le fluide est l'air atmosphérique.

12. Système de production d'énergie selon une quelconque des revendications précédentes, dans lequel l'échangeur de chaleur est placé dans une partie supérieure de la chambre de combustion.

13. Système de production d'énergie selon une quelconque des revendications précédentes, dans lequel l'échangeur de chaleur est placé au sommet ou près du sommet de la chambre de combustion

14. Système de production d'énergie selon une quelconque des revendications précédentes, dans lequel l'échangeur de chaleur comprend un conduit dans lequel du fluide circule pour être chauffé, le conduit définissant un trajet tortueux pour faciliter le chauffage du fluide dans ce conduit.

15. Système de production d'énergie selon la revendication 14, dans lequel l'échangeur de chaleur maintient le fluide séparé des gaz de combustion engendrés pendant la combustion, tout en laissant les gaz passer autour de l'extérieur du conduit pour chauffer ainsi le fluide qui passe dans le conduit.

16. Système de production d'énergie selon la revendication 14 ou la revendication 15, dans lequel les déflecteurs dévient les gaz de combustion sur le conduit afin de faciliter la transmission de la chaleur.

17. Système de production d'énergie selon l'une quelconque des revendications précédentes, dans lequel l'échangeur de chaleur comprend une matière isolante pour améliorer encore davantage la transmission de la chaleur.

18. Système de production d'énergie selon la revendication 17, dans lequel la matière isolante double l'intérieur d'une enceinte de l'échangeur.

19. Système de production d'énergie selon la revendication 17 ou la revendication 18, dans lequel la matière comprend une matière céramique.

20. Système de production d'énergie selon une quelconque des revendications précédentes, dans lequel l'échangeur de chaleur comprend des matières capables de résister à de hautes températures et de conserver leur solidité et leur géométrie à des températures allant jusqu'à environ 1000°C tout en assurant une bonne conduction de la chaleur, comme un acier inoxydable exotique ou une autre matière appropriée, conductrice et cependant durable.

21. Système de production d'énergie selon une quelconque des revendications précédentes, dans lequel l'échangeur de chaleur est facile à démonter, au moins en partie, pour faciliter son nettoyage, en particulier le nettoyage de l'extérieur du conduit, par exemple pour enlever les produits de combustion tels que la suie et d'autres dépôts carbonés.

22. Système de production d'énergie selon une quelconque des revendications précédentes, dans lequel l'échangeur de chaleur est agencé pour permettre au fluide qui le traverse d'être chauffé à environ 800-900°C, selon la matière qui est brûlée.

23. Système de production d'énergie selon une quelconque des revendications précédentes, dans lequel la chambre de combustion est agencée pour accepter la combustion d'une gamme de matières combustibles solides tels que des déchets combustibles, des combustibles fossiles et du bois.

24. Système de production d'énergie selon la revendication 23, dans lequel la chambre est agencée pour accepter la combustion d'un fluide durable et/ou renouvelable.

25. Système de production d'énergie selon une quelconque des revendications précédentes, dans lequel le fluide chauffé sort de l'échangeur de chaleur pour être introduit dans la turbine pour entraîner la turbine pour produire de l'énergie électrique.

26. Système de production d'énergie selon une quelconque des revendications précédentes, dans lequel le conduite relie l'échangeur de chaleur à la turbine.

27. Système de production d'énergie selon une quelconque des revendications précédentes, dans lequel la turbine est éloignée de l'échangeur de chaleur.

28. Système de production d'énergie selon une quelconque des revendications précédentes, dans lequel un moyen est prévu pour traiter l'énergie produite.

29. Système de production d'énergie selon la revendication 28, dans lequel le moyen comprend un onduleur/redresseur.

30. Système de production d'énergie selon une quelconque des revendications précédentes, dans lequel le moyen est prévu pour renvoyer le fluide qui a entraîné la turbine dans la chambre de combustion où toute chaleur résiduelle contenue dans le fluide facilitera et renforcera le rendement de la combustion.

31. Système de production d'énergie selon une quelconque des revendications précédentes, dans lequel le système comprend en outre des moyens pour utiliser les gaz résiduaires issus de la chambre de combustion, en particulier pour utiliser la chaleur résiduelle contenue dans les gaz pour chauffer, par exemple, un appareil tel qu'un radiateur, avant que les gaz ne soient évacués du système.

32. Procédé de production d'énergie, le procédé comprenant de faire brûler une matière combustible solide dans une chambre de combustion pour chauffer un fluide qui passe à travers un échangeur de chaleur associé à la chambre de combustion et qui comprend des déflecteurs pouvant être sélectivement enlevés ; et l'action d'utiliser ledit fluide chauffé pour entraîner une turbine pour produire de l'énergie.

33. Procédé selon la revendication 32, qui comprend l'utilisation d'un système selon une quelconque des revendications 1 à 31.
